# EUROPÄISCHE PATENTSCHRIFT

(11) **EP 1 231 171 B1**
(45) Veröffentlichungstag und Bekanntmachung des Hinweises auf die Patenterteilung: **06.09.2006**
(21) Anmeldenummer: 02001545.9
(22) Anmeldetag: 23.01.2002
(51) Int. Cl.: B65G 69/28

(54) **Überladebrücke**
Loading bridge
Pont de transbordement

(30) Priorität: 13.02.2001 DE 10107069; 17.05.2001 DE 10124006
(43) Veröffentlichungstag der Anmeldung: 14.08.2002
(73) Patentinhaber: Benno Drössler GmbH & Co, Bauunternehmung KG, 57080 Siegen (DE)
(72) Erfinder: Drössler, Christian, Dipl.-Ing., 57074 Siegen (DE)
(74) Vertreter: Valentin, Ekkehard

(56) Entgegenhaltungen:
- DE-A- 3 310 278
- DE-U- 29 803 587
- NL-A- 9 101 792
- US-A- 6 106 191

## Beschreibung

Die Erfindung betrifft eine Überladebrücke zur Bildung einer Anfahrmöglichkeit für ein Fahrzeug an ein Gebäude nach dem Oberbegriff des Anspruchs 1 sowie ein Verfahren zur Herstellung einer solchen Überladebrücke nach dem Oberbegriff des Anspruchs 7.

Um eine Fahrzeug-Anfahrmöglichkeit an Gebäude, insbesondere Lagerhallen oder dergleichen, zu schaffen, werden diese Gebäude mit sogenannten Überladebrücken versehen, das heißt Anschlußmöglichkeiten, an die jeweils ein Lastkraftwagen direkt, mit seinem Auflieger oder Anhänger rückwärts anfahren kann, um in dieser Stellung be- oder entladen zu werden. Solche Überladebrücken können eine Rampe umfassen, die beispielsweise als Stahlplatte ausgebildet ist und sich vom Gebäude in den Laderaum des Fahrzeugs erstrecken kann. Um den Höhenunterschied zwischen dem Boden des Gebäudes und dem Laderaum überbrücken zu können, kann die Rampe beweglich, beispielsweise um eine horizontale Achse schwenkbar, sein. Die Überladebrücke enthält einen Tragkörper, der als Fundament für eine derartige Rampe dienen kann und der in Draufsicht U-förmig ausgebildet ist, wobei die offene Seite der U-Form nach außen weist. Damit wird ein Einfahren einer eventuell vorhandenen beweglichen LKW-seitigen Ladebühne in den Raum zwischen den Schenkeln der U-Form ermöglicht. Die Ladebühne wird bei Anfahrt des Lastkraftwagens in einer unteren Position gehalten und ist somit in Anfahrstellung unterhalb der Rampe aufgenommen.

Bei bisherigen Überladebrücken sind die Tragkörper und die darauf aufliegenden Kragplatten, die als Abstützung für die Rampe dienen, entweder erst am Montageort, also an der Baustelle des Gebäudes, als Ortbetonkörper hergestellt, was angesichts von zu langen Ausschalfristen bei gewünschten immer kürzeren Bauzeiten nachteilig ist. Alternativ werden auch einige oder alle Wandungen der Tragkörper als Betonfertigteile angeliefert und am Montageort zusammengesetzt. Hierbei ergeben sich jedoch Probleme hinsichtlich der Paßgenauigkeit. Zudem ist der Montageaufwand durch die Ausbildung zusätzlicher Schraub- oder Schweißverbindungen der Fertigteile untereinander erhöht. Auch ist der Bodenplattenanschluß ein Problem. Dieser wird etwa dadurch realisiert, daß auf den Seitenwänden der Tragkörper aufliegende Kragplatten mit Aufbeton übergossen werden, was allerdings zu einem Steifigkeitssprung führt.

Durch das DE 298 03 587 U1 ist bereits eine Überladebrücke mit Verladebucht aus einem vorgefertigten Stahlbetonteil als Verbundsystem bekannt geworden, das Verbundsystem weist jedoch ein sehr hohes Gewicht auf und ist sehr schwer zu transportieren und handhaben. Frostschürzen müssen aufwändig erstellt und montiert werden.

Der Erfindung liegt die Aufgabe zugrunde, die Fertigung von Tragkörpern aus Stahlbeton für unterfahrbare Überladebrücken zu verbessern, und deren Einbau zu erleichten.

Die Erfindung löst dieses Problem durch eine Überladebrücke mit den Merkmalen des Anspruchs 1 sowie durch ein Verfahren mit den Merkmalen des Anspruchs 7. Hinsichtlich vorteilhafter Ausgestaltungen wird auf die Ansprüche 2 bis 6 und 8 bis 10 verwiesen.

Mit der erfindungsgemäßen Überladebrücke ist die Bauzeit erheblich verkürzt. Es ist eine sofortige Belastung des Tragkörpers am Montageort möglich. Ausschalfristen entfallen. Zudem kann durch die stirnseitigen Abschlußteile zu den Stützen oder benachbarten Tragkörpern eine Schalung für zu hinterfüllendes Erdreich geschaffen sein. Auch kann diese Hinterfüllung sofort nach Anlieferung der die Gruben bildenden Tragkörper vorgenommen werden. Zusätzliche Befestigungsmittel für eine Verbindung von angelieferten Fertigteilen sind entbehrlich.

Wenn besonders vorteilhaft in Einbaustellung die Wandungskörper benachbarter Überladebrücken aneinander angrenzen, ist eine optisch und mechanisch geschlossene Vorderfläche der Überladebrücken geschaffen, so daß die Hinterfüllung mit Erdreich nicht nur im Nahbereich der jeweiligen Anfahrstellen abgestützt ist, sondern über die gesamte mit Überladebrücken versehene Seite des Gebäudes durch die Wandungskörper nach vorne abgesichert ist. Es sind keine zusätzlichen Frontabschlußelemente erforderlich.

Wenn zur Herstellung der Überladebrücken Schalungen mit lageveränderlichen Teilbereichen zur Bestimmung der Breite der vorderen Abschlußflächen eingesetzt werden, können diese an verschiedene Abstände zwischen benachbarte Überladebrücken angepaßt werden, wobei trotz der unterschiedlichen Abstände jeweils ein Aneinandergrenzen der Abschlußflächen sichergestellt werden kann.

Bei Anwendung eines Verfahrens, mit dem ein Rahmen als Abstützung für eine auf einen Tragkörper aufzumontierende Rampe als Fertigteil auf den Tragkörper aufgelegt wird, ist ein Aufgießen von Aufbeton entbehrlich. Die Montage ist daher vereinfacht. Insbesondere ist damit ein Steifigkeitssprung zwischen einem nachträglich betonierten Betonkragteil und der angrenzenden Bodenplatte vermieden. Der zu bildende Boden des Gebäudes kann dann direkt bis an die Rahmen heran gegossen oder anders gebildet werden, ohne daß dem Nahbereich der Überladebrücken besondere Aufmerksamkeit gewidmet werden müßte. Dies ist insbesondere bei der Ausbildung von Industriebodenplatten mit Verschleißschichten "frisch in frisch" von Vorteil, da ein durchgehendes Arbeiten ohne nachträglichen Verguß zum Brückenrahmen und nachträgliches Beschichten der Übergangsbereiche möglich ist.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine perspektivische Ansicht eine Tragkörpers der erfindungsgemäßen Überladebrücke,
- Fig. 2: eine Draufsicht auf den Tragkörper nach Fig. 1,
- Fig. 3: den Tragkörper nach Fig. 1 in Ansicht von vorne,
- Fig. 4: eine perspektivische Ansicht eines Gebäudes während der Montage, wobei eine Mehrzahl von nebeneinander angeordneten Überladebrücken vorgesehen ist, deren vordere Abschlußflächen aneinander angrenzen,
- Fig. 5: das Detail V in Fig. 4,
- Fig. 6: einen zur Herstellung der Tragkörper verwendbaren Schalungskem in Ansicht von vorne,
- Fig. 7: den Schalungskern nach Fig. 6 in Ansicht von oben.

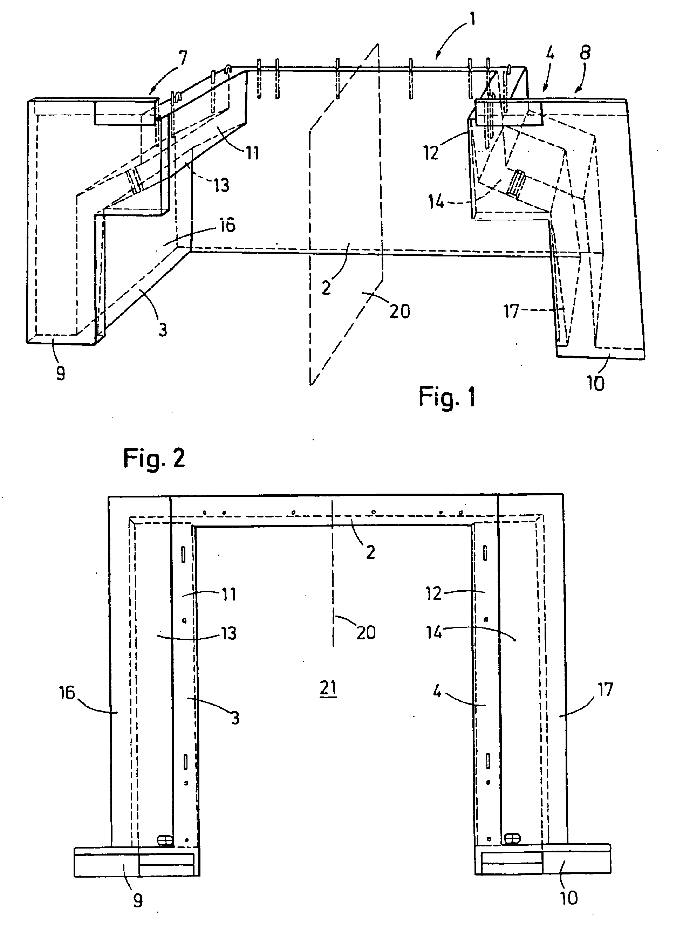

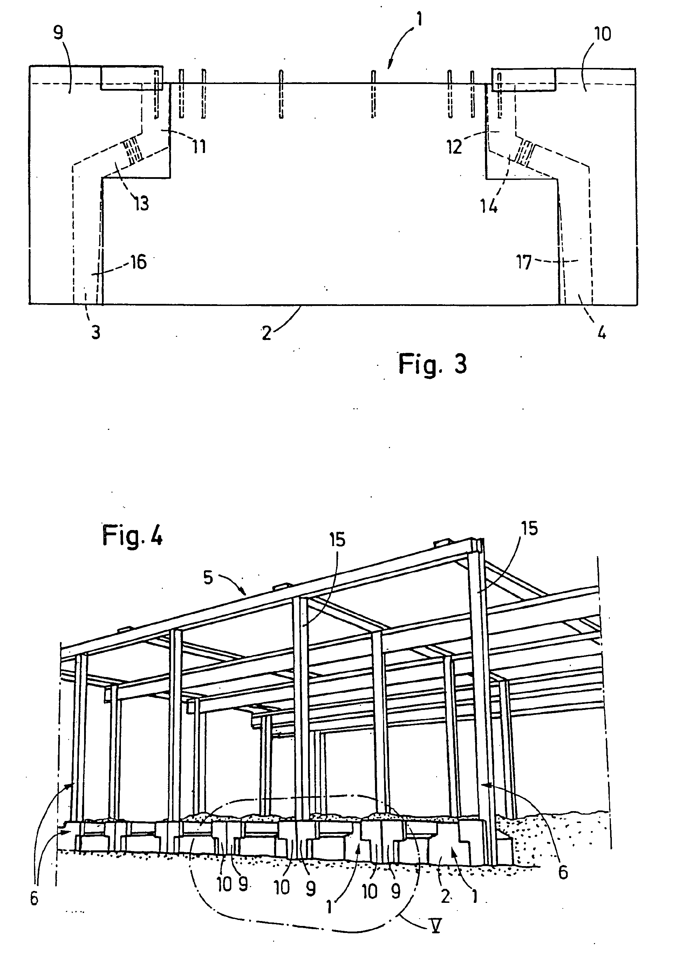

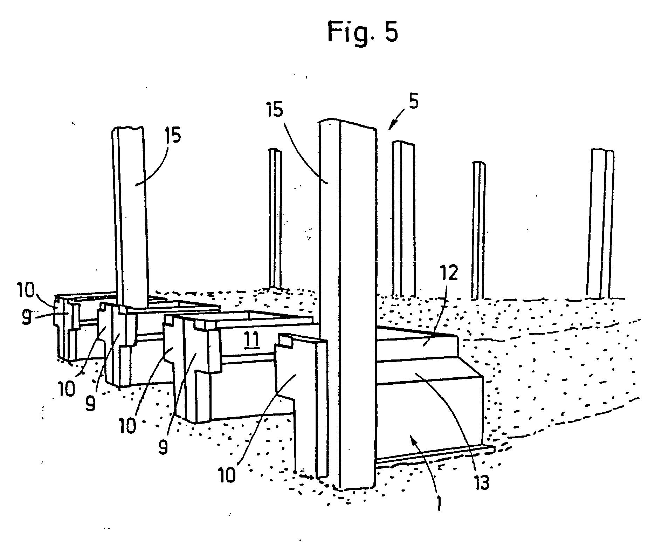

Im Ausführungsbeispiel ist beispielhaft ein Tragkörper 1 (Fig. 1 bis Fig. 3) dargestellt, der insgesamt als einstückiges Betonfertigteil ausgebildet ist und der als tragender Bestandteil für eine Überladebrücke vorgesehen ist. Der Tragkörper 1 ist in Draufsicht U-förmig und umfaßt einen Mittelschenkel 2 sowie zwei seitliche Außenschenkel 3, 4. In Einbaustellung (Fig.4, Fig. 5) sind mehrere Tragkörper 1 nebeneinander an einem Gebäude 5 angeordnet, um somit eine Reihe von Überladebrücken für Lastkraftwagen auszubilden. Selbstverständlich ist auch die Ausbildung von lediglich einzelnen Ladebrücken an einem Gebäude 5 möglich.

In Anfahrstellung eines Fahrzeugs, insbesondere eines Lastkraftwagens, ist der Mittelschenkel 2 parallel zur hinteren Bordwand dieses Fahrzeugs, also zur Fahrzeugquerrichtung, gelegen, wohingegen die rechtwinklig hierzu stehenden Außenschenkel 3, 4 sich parallel zur Fahrzeuglängsrichtung erstrecken.

An den dem Mittelschenkel 2 abgewandten und damit in Einbaustellung zur Außenwand 6 des Gebäudes 5 weisenden Enden 7, 8 der Außenschenkel 3, 4 sind vordere Abschlußteile 9, 10 vorgesehen, die als flächige Wandungskörper ausgebildet sind und in Einbaustellung vertikal stehen. Diese erstrecken sich im wesentlichen von einer vertikalen Längsmittelebene 20 des Tragkörpers 1 auswärts, um damit den durch den U-förmigen Tragkörper 1 gebildeten Aufnahmeraum 21 für eine Ladebordwand eines LKW nicht einzuengen. Durch den gebildeten Aufnahmeraum 21 kann die Ladebordwand in abgesenkter Stellung zwischen die Außenschenkel 3, 4 unterhalb einer Rampe (nicht dargestellt) eingefahren werden. Vorzugsweise sind dabei die Außenschenkel 3, 4 als aufrecht stehende Wandungen mit einem einwärts versetzten oberen Wandabschnitt 11, 12 ausgebildet. Dadurch ist die Unterstützung für die Rampe mechanisch stabiler, als wenn im oberen Bereich die volle Breite belassen würde. Andererseits ist durch die große Breite im unteren Bereich das Einfahren der LKW-Ladebordwand auch mit einiger Toleranz ermöglicht, was das Rangieren erleichtert. Der Tragkörper 1 hat damit etwa eine lichte Innenweite von etwas mehr als zwei Metern und eine Gesamtaußenbreite von knapp vier Metern.

Die oberen Wandabschnitte 11, 12 gehen über schräg auswärts verlaufende Übergangsbereiche 13, 14 in weiter auswärts stehende untere Wandabschnitte 16, 17 über. Dies eröffnet gegenüber dem bisher üblichen Aufgießen von Aufbeton als Kragplatten den Vorteil eines kontinuierlichen Steifigkeitsübergangs unter Vermeidung von Steifigkeitssprüngen. Zudem dienen die Wandungen 3, 4 als verlorene Schalung, die sofort nach Anlieferung mit Erdreich hinterfüllt werden können.

Eine Bodenplatte für das Gebäude 5 kann dann insgesamt bis an den Rand der Überladebrücke aus einem Stück gegossen werden. Ein Aufgießen von Kragplatten an bereits bestehende Beton-Kragteile ist nicht erforderlich. Auch ist insgesamt eine Betonplatte als Boden für die Stabilität nicht erforderlich. Die Tragkörper 1 sind in sich stabil. Auch eine Pflasterung oder andere Bodenbefestigung ist daher möglich.

Die Abschlußteile 9, 10 sind einstückig mit den Tragkörpern 1 gegossen, wodurch die Tragkörper 1 insgesamt mit den vorderen Abschlußteilen 9, 10 als einstückige Fertigteile an den Montageort angeliejers werden können.

Die vorderen Abschlußteile 9, 10 erstrecken sich derart weit von der Ebene 20 auswärts, daß die Abschlußteile 9, 10 benachbarter Überladebrücken aneinander angrenzen (Fig.4, Fig.5). Somit ist am Gebäude 5 eine geschlossene Vorderfläche geschaffen. Diese kann insgesamt mit Erdreich hinterfüllt werden und bildet hierfür eine verlorene Schalung aus.

Wie in den Figuren 4 und 5 sichtbar ist, sind die Abschlußteile 9, 10 in Einbaustellung unmittelbar von Tragstützen 15 des Gebäudes 5 hintergriffen. Bevorzugt findet eine Festlegung der Abschlußteile 9, 10 an diesen Tragstützen 15 statt, um somit die Stabilität des Bauwerks zu erhöhen. Hierfür können die Vorderflächen mit Befestigungsansätzen versehen sein, etwa mit Bohrungen für einzusetzende Bolzen, mit eingegossenen Stahldornen oder ähnlichen formschlüssig sichernden Befestigungsmitteln.

Für die Herstellung der Überladebrücken erfolgt zunächst außerhalb der Baustelle eine vollständige Fertigung der Tragkörper 1. Diese Fertigung kann als Serienfertigung ausgebildet sein. Die Tragkörper 1 härten dann entweder vollständig oder zumindest so weit aus, daß sie transportiert und als Schalungsteile für anzuschüttendes Erdreich oder dergleichen Bodenunterfütterung verwendet werden können. An die jeweiligen Tragkörper 1 werden die Abschlußteile 9, 10 einstückig angegossen.

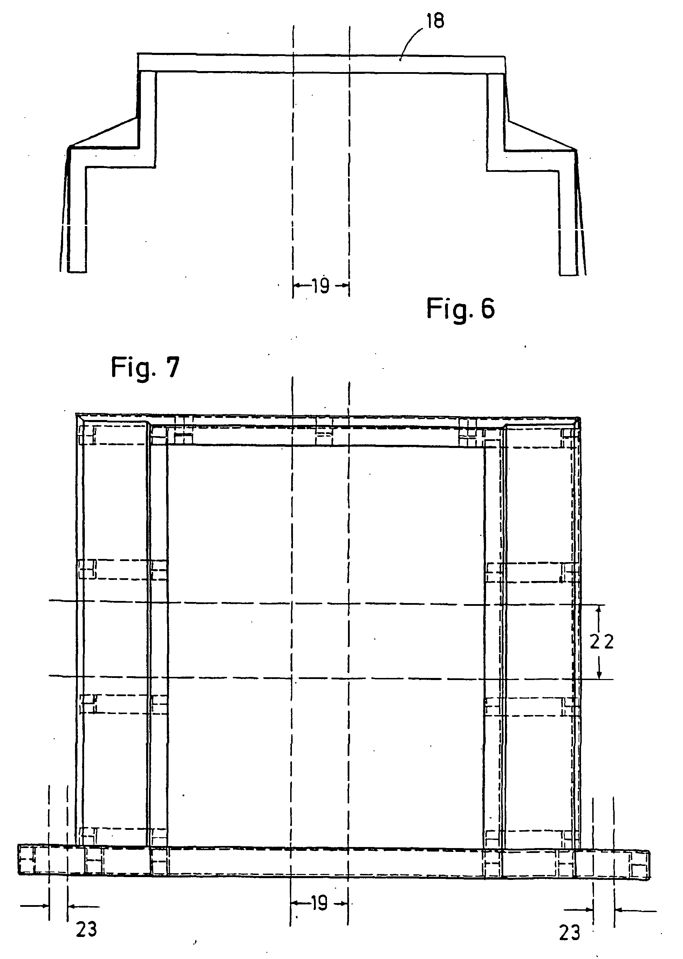

Um eine weitgehende Anpassung an unterschiedliche Maßvorstellungen von Kunden ermöglichen zu können, ist der Schalungskem 18 (Fig. 6, Fig. 7) in Richtung der Pfeile 19, 22 und 23 verschieblich ausgebildet. Dadurch können unterschiedliche Breiten (Pfeil 19) und Längen (Pfeil 22) der Grube verwirklicht werden. Insbesondere ist auch der auswärts weisende Abschluß des Schalungskems 18 zur Bildung der Abschlußteile 9, 10 verschieblich (Pfeil 23). Es können somit verschiedene Breiten von Abschlußteilen 9, 10 ausgebildet werden, um auch bei unterschiedliche Abständen der Gruben jeweils ein direktes Aneinandergrenzen der Abschlußteile 9, 10 benachbarter Tragkörper 1 zu ermöglichen. Damit kann auch ein außergewöhnlich großer Grubenabstand, wie er etwa bei Gebäuden 5 mit nur wenigen Überladebrücken gewünscht sein kann, berücksichtigt werden.

Unabhängig von der Ausbildung vorderer Abschlußteile 9, 10, jedoch besonders vorteilhaft in Kombination mit diesen kann auf die gebildeten Tragkörper 1 am Montageort ein Rahmen zur Abstützung für eine Rampe aufgelegt werden. Der Rahmen kann dabei als verlorene Schalung dienen und aufbetoniert werden. Alternativ ist auch möglich, den Rahmen direkt bei der Herstellung des Tragkörpers 1 mit aufzubetonieren. In jedem Fall ist es entbehrlich, am Montageort extra Kragplatten mit den oben besprochenen Problemen hinsichtlich der Steifigkeit aufzubetonieren. Es ist eine erhebliche Maßgenauigkeit erreicht.

Das Rahmenteil selbst kann ein vorgefertigtes Stahlbauteil sein. Extra Kragplatten sind als Rahmenteil nicht erforderlich.

Der Tragkörper 1 kann insgesamt aus selbstverdichtendem Beton ausgebildet sein. Ein Rütteln oder dergleichen Verfestigen ist dann entbehrlich, was die Herstellung weiter beschleunigt.

### Bezugszeichenliste

- 1: Tragkörper,
- 2: Mittelschenkel,
- 3: Außenschenkel,
- 4: Außenschenkel,
- 5: Gebäude,
- 6: Außenwand,
- 7: abgewandtes Ende,
- 8: abgewandtes Ende,
- 9: Abschlußteil,
- 10: Abschlußteil,
- 11: oberer Wandabschnitt,
- 12: oberer Wandabschnitt,
- 13: Übergangsbereich,
- 14: Übergangsbereich,
- 15: Tragstütze,
- 16: unterer Wandabschnitt,
- 17: unterer Wandabschnitt,
- 18: Schalungskem,
- 19: Pfeil,
- 20: vertikale Längsmittelebene,
- 21: Aufnahmeraum,
- 22: Pfeil,
- 23: Pfeil.

## Patentansprüche

1. Überladebrücke zur Schaffung einer Anfahrmöglichkeit für ein Fahrzeug, insbesondere einen Lastkraftwagen, an ein Gebäude (5), wobei die Überladebrücke einen in Draufsicht im wesentlichen U-förmigen, einstückig und als Fertigteil ausgebildeten Tragkörper (1) mit einem sich in Anfahrstellung des Fahrzeugs parallel zum Fahrzeugheck erstreckten Mittelschenkel (2) und zwei seitlichen, hiervon in Fahrzeuglängsrichtung erstreckten Außenschenkeln (3;4) sowie eine vom Tragkörper (1) getragene Rampe umfasst,
**dadurch gekennzeichnet,**
**dass** an den dem Mittelschenkel (2) abgewandten Enden (7; 8) der Außenschenkel (3; 4) jeweils ein parallel zum Mittelschenkel (2) erstrecktes vorderes Abschlußteil (9; 10) umfasst, wobei die vorderen Abschlussteile (9; 10) und die U-förmig angeordneten Schenkel (3; 4) einstückig ausgebildet sind.

2. Überladebrücke nach Anspruch 1,
**dadurch gekennzeichnet,**
**dass** die vorderen Abschlussteile (9; 10) Ansätze zur Befestigung an dem Gebäude (5) zugeordneten Tragstützen (15) aufweisen.

3. Überladebrücke nach einem der Ansprüche 1 oder 2,
**dadurch gekennzeichnet ,**
**daß** die Abschlußteile (9;10) als in montierter Stellung vertikale und sich von den Außenschenkeln (3; 4) im wesentlichen auswärts erstreckende Wandungskörper ausgebildet sind.

4. Überladebrücke nach Anspruch 3,
**dadurch gekennzeichnet ,**
**daß** die Abschlußteile (9; 10) derart weit seitlich erstreckt sind, daß in Einbaustellung mehrerer Überladebrücken nebeneinander die Abschlußteile (9; 10) benachbarter Überladebrücken aneinander angrenzen.

5. Überladebrücke nach einem der Ansprüche 1 bis 4,
**dadurch gekennzeichnet ,**
**daß** die Außenschenkel (3; 4) durch aufrechte Wandungen mit zumindest jeweils einem einwärts versetzten oberen Wandabschnitt (11; 12) gebildet sind.

6. Überladebrücke nach einem der Ansprüche 1 bis 5,
**dadurch gekennzeichnet,**
**daß** der Tragkörper (1) aus selbstverdichtendem Beton besteht.

7. Verfahren zur Herstellung einer Überladebrücke nach einem der Ansprüche 1 bis 6, wobei die Überladebrücke zwischen Schalungsteilen gegossen und als zumindest teilweise ausgehärteter Baukörper seinem Montageort zugeführt wird,
**dadurch gekennzeichnet ,**
**daß** zumindest die Schalungsteile zur Bildung der vorderen Abschlußflächen lageveränderliche Teilbereiche zur Ausbildung von verschiedener Breiten umfassen.

8. Verfahren nach Anspruch 7,
**dadurch gekennzeichnet ,**
**daß** am Montageort auf den Tragkörper (1) ein Rahmenteil zur Abstützung der Rampe aufgelegt wird.

9. Verfahren nach Anspruch 8,
**dadurch gekennzeichnet,**
**daß** das Rahmenteil ein vorgefertigtes Stahlbauteil ist.

10. Verfahren nach einem der Ansprüche 7 bis 9,
**dadurch gekennzeichnet,**
**daß** die Überladebrücken in Montagestellung derart angeordnet werden, daß die Abschlußteile benachbarter Überladebrücken direkt aneinander angrenzen und als Schalungsteile für eine hinter den gebildeten Wandungen einzubringende Verfüllung dienen.

## Claims

1. A levelling bridge for providing a starting possibility for a vehicle, particularly a truck, on a building (5), wherein the levelling bridge comprises in elevation, essentially U-shaped, integral supporting body (1) designed as a finished part with a central leg (2) extending in the starting position of the vehicle parallel with the rear of the vehicle and two lateral outer legs (3, 4) extending in the longitudinal direction of the vehicle, as well as a ramp supported by the supporting body (1),
**characterised in that**
the outer leg (3; 4) comprises a front sealing part (9; 10) extending parallel with the central leg (2) at each of the ends (7; 8) facing away from the central leg (2), wherein the front sealing parts (9; 10) and the legs (3; 4) arranged in a U shape are integrally designed.

2. The levelling bridge according to claim 1,
**characterised in that**
the front sealing parts (9; 10) have shoulders for securing to supports (15) assigned to the building (5).

3. The levelling bridge according to claim 1 or 2,
**characterised in that**
the sealing parts (9; 10) are designed as wall elements that are vertical in the mounted position and extend from the outer legs (3; 4) essentially outwards.

4. The levelling bridge according to claim 3,
**characterised in that**
the sealing parts (9; 10) extend laterally for such a distance that in the installation position of a plurality of levelling bridges the sealing parts (9; 10) of adjacent levelling bridges lie adjacent to each other.

5. The levelling bridge according to anyone of claims 1 to 4,
**characterised in that**
the outer les (3; 4) are formed by upright walls, each with at least one upper wall section (11; 12) that are inwardly offset.

6. The levelling bridge according to any one of claims 1 to 5,
**characterised in that**
the supporting body (1) consists of self-setting concrete.

7. A method for manufacturing a levelling bridge according to any one of claims 1 to 6, wherein the levelling bridge is cast between shuttering sections and is associated with its site of assembly as an at least partially set structural element,
**characterised in that**
at least the shuttering sections comprise partial regions with variable positions for forming the front sealing faces and for forming different widths.

8. The method according to claim 7,
**characterised in that**
a frame section is mounted at the point of assembly on the supporting body (1) for supporting the ramp.

9. The method according to claim 8,
**characterised in that**
the frame section is a prefabricated structural steel part.

10. The method according to any one of claims 7 to 9,
**characterised in that**
the levelling bridges are arranged in the assembly position so that the sealing parts of adjacent levelling bridges lie adjacent to each other and serve as shuttering parts for a filling to be inserted behind the walls formed.

## Revendications

1. Pont de transbordement permettant de créer une possibilité d'approche d'un véhicule, notamment d'un camion, d'un bâtiment (5), le pont de transbordement comprenant un corps support (1) sensiblement en forme de U en vue du dessus, réalisé d'une pièce et sous forme de pièce finie avec une branche médiane (2) s'étendant parallèlement au hayon du véhicule en position d'approche du véhicule et deux branches extérieures latérales (3 ; 4) s'étendant de là dans le sens longitudinal du véhicule ainsi qu'une rampe supportée par le corps support (1),
**caractérisé en ce que**,
aux extrémités (7 ; 8) détournées de la branche médiane (2), la branche extérieure (3 ; 4) comporte respectivement un élément de limitation avant (9 ; 10) s'étendant respectivement parallèlement à la branche médiane (2), tandis que les éléments de limitation avant (9 ; 10) et les branches disposées en forme de U (3 ; 4) sont réalisés en un bloc.

2. Pont de transbordement selon la revendication 1,
**caractérisé en ce que**
les éléments de limitation avant (9 ; 10) comportent des pièces ajoutées destinées à être fixées à des étais (15) associés au bâtiment (5).

3. Pont de transbordement selon une des revendications 1 ou 2,
**caractérisé en ce que**
les éléments de limitation (9 ; 10) sont réalisés sous forme de corps de paroi verticaux en position montée et s'étendant sensiblement vers l'extérieur depuis les branches extérieures (3 ; 4).

4. Pont de transbordement selon la revendication 3,
**caractérisé en ce que**
les éléments de limitation (9 ; 10) s'étendent latéralement sur une distance telle que, qu'en position de montage de plusieurs ponts de transbordement les uns près des autres, les éléments de limitation (9 ; 10) des ponts de transbordement voisins soient contigus.

5. Pont de transbordement selon une des revendications 1 à 4,
**caractérisé en ce que**
les branches extérieures (3 ; 4) sont constituées par des parois verticales comportant respectivement au moins une section de paroi supérieure décalée vers l'intérieur (11 ; 12).

6. Pont de transbordement selon une des revendications 1 à 5,
**caractérisé en ce que**
le corps support (1) est composé de béton auto-densifiant.

7. Procédé de fabrication d'un pont de transbordement selon une des revendications 1 à 6, dans lequel le pont de transbordement est coulé entre des pièces de coffrage et est acheminé sous forme d'un corps de construction du moins sensiblement durci vers son lieu de montage,
**caractérisé en ce que**
au moins les pièces de coffrage servant à former les surfaces de limitation avant comprennent des zones partielles à longueur variable pour réaliser des largeurs différentes.

8. Procédé selon la revendication 7,
**caractérisé en ce que**,
au lieu de montage sur le corps support (1), on pose une pièce de châssis pour soutenir la rampe.

9. Procédé selon la revendication 8,
**caractérisé en ce que**
la pièce de châssis est une pièce de construction préfabriquée en acier.

10. Procédé selon une des revendications 7 à 9,
**caractérisé en ce que**
les ponts de transbordement sont disposés en position de montage de manière à ce que les éléments de limitation des ponts de transbordement voisins soient directement contigus et servent de pièces de coffrage pour un remplissage à intégrer derrière les parois constituées.
